# EUROPÄISCHE PATENTANMELDUNG

(11) **EP 0 997 999 A1**
(43) Veröffentlichungstag der Anmeldung: **03.05.2000**
(21) Anmeldenummer: 99120184.9
(22) Anmeldetag: 09.10.1999
(51) Int. Cl.: H02G 3/06, H02G 3/08

(54) **Schelle zur Befestigung von Leitungen**

(30) Priorität: 27.10.1998 DE 19849479
(71) Anmelder: HYDAC Befestigungstechnik GmbH, 66125 Saarbrücken-Dudweiler (DE)
(72) Erfinder: Brabänder, Wolfgang, Dipl.-Ing., 66424 Homburg (DE); Junkes, Peter Eugen, Dipl.-Ing., 66424 Homburg (DE); Even, Rainer, Dipl.-Ing., 66123 Saarbrücken (DE)
(74) Vertreter: Patentanwälte Bartels und Partner

(57) **Zusammenfassung**

Bei einer Schelle für Schlauch- oder Rohrleitungen mit einem zwischen Klemmbacken angeordneten, eine betreffende Leitung umgebenden Einsatz (9) in Form einer geschlitzten Hülse (10) aus nachgiebigem Werkstoff, deren mit der Innenfläche (15) einstückige Fußteile (38) sich in Längsrichtung der Hülse (10) erstrecken und die mit ihrem kopfseitigen Endbereich Anlageflächen für die Leitung bilden, sind die Profilkörper als leistenartige Lamellen (37) ausgebildet, bei denen das Verhältnis zwischen der von Fußteil bis zum kopfseitigen Endbereich gemessenen Profilhöhe und der in Umfangsrichtung an den Fußteilen (38) gemessenen Profilbreite einen Wert von 2 : 1 oder mehr besitzt.

## Beschreibung

Die Erfindung bezieht sich auf eine Schelle zur Befestigung von Leitungen in Form von Schläuchen, Rohren, Kabeln oder dergleichen, mit einem zwischen Klemmbacken angeordneten, eine betreffende Leitung umgebenden Einsatz in Form einer geschlitzten Hülse aus nachgiebigem Werkstoff, die an ihrer Innenfläche vorspringende Profilkörper aufweist, deren mit der Innenfläche einstückige Fußteile sich in Längsrichtung der Hülse erstrecken und die mit ihrem kopfseitigen Endbereich Anlageflächen für die Leitung bilden.

Schellen dieser Art sind bekannt und handelsüblich. Sie werden beispielsweise als Schelle mit Elastomereinsatz nach DIN 3015 unter der Bezeichnung HY-ROS von der Anmelderin vertrieben.

Die Proflilierung der Innenfläche der als Einsatz vorgesehenen Hülse aus elastomerem Material soll eine schonende, vibrationsdämpfende und schalldämmende Befestigung von Schläuchen und Rohren ermöglichen, insbesondere eine schonende Befestigung von Schläuchen ohne Kantenpressung, um die Gefahr des Durchschäuerns oder Abknickens der Leitung zu vermeiden. Die bekannten Schellen, bei denen die Innenfläche der Elastomereinsätze mit Profilkörpern in Form von Längsrippen versehen ist, werden den vorstehend genannten Anforderungen jedoch nicht in ausreichendem Maße gerecht.

Der Erfindung liegt die Aufgabe zugrunde, eine Schelle zu schaffen, deren nachgiebiger Einsatz nicht nur schall- und schwingungsdämpfend ist, sondern Toleranz- und Winkelabweichungen beträchtlichen Ausmaßes sowie Wärmeausdehnungen zu kompensieren vermag.

Erfindungsgemäß ist diese Aufgabe bei einer Schelle der eingangs genannten Art dadurch gelöst, daß die Profilkörper als leistenartige Lamellen ausgebildet sind, bei denen das Verhältnis zwischen der von Fußteil bis zum kopfseitigen Endbereich gemessenen Profilhöhe und der in Umfangsrichtung an den Fußteilen gemessenen Profilbreite einen Wert von 2 : 1 oder mehr besitzt.

Dadurch, daß erfindungsgemäß an der Innenfläche der den Einsatz bildenden Hülse anstelle längsverlaufender Rippen, die verhältnismäßig starre Vorsprünge darstellen, schlanke Profilkörper in Form von Lamellen vorgesehen sind, bildet die Hülse für die betreffende Leitung einen weicheren Sitz, wodurch Schwingungen größerer Amplituden sowie Toleranzen und Ausrichtfehler größeren Ausmaßes beherrschbar sind.

Bei extremen Anforderungen kann die Geometrie der Lamellen den entsprechenden Einsatzbedingungen angepaßt werden. Beispielsweise können die kopfseitigen Endbereiche der schmalen Lamellen beidseits auskragende Erweiterungen besitzen, deren Oberseite die Anlageflächen für die Leitung bilden. Diese Oberseiten können eine konvexe Wölbung besitzen, also für die Leitung Anlageflächen mit unterschiedlichem radialem Abstand vom Hülsenzentrum bilden, so daß aufgrund der Nachgiebigkeit der schlanken Lamellen auch bei Toleranzen und Ausrichtungsfehlern eine linienförmige Anlage jedes Lamellen-Endbereiches an der Leitung gewährleistet ist.

Die Lamellen können in der Hülse auch so angeordnet sein, daß ihre Hauptebenen geneigt zur Radialrichtung verlaufen. Dadurch wird eine besonders nachgiebige Lagerung der Leitung erreicht, weil Radialkräfte ein Biegemoment an den Lamellen zum Ausbiegen derselben und ein Drehmoment am Fußteil erzeugen, das, da die Verbinung zwischen Fußteil und Innenfläche der Hülse als Filmscharnier wirkt, eine Schwenkbewegung der Lamellen erzeugen kann.

Gegenstand der Erfindung ist auch eine Schelle gemäß Anspruch 5, bei der an der Innenfläche der den Einsatz bildenden Hülse keine in Längsrichtung verlaufenden Profilkörper vorgesehen sind, sondern an der Innenfläche vorpringende Wandteile in Form von Noppen vorgesehen sind. Wie sich gezeigt hat ergeben sich die erstrebten, verbesserten Lagerungseigenschaften für Schlauch- oder Rohrleitungen auch bei Verwendung von an der Innenfläche genoppten Hülsen, beispielsweise mit an der Innenfläche vorgesehenen kugeligen Noppen, die in enger gegenseitiger Lagebeziehung angeordnet sind.

Nachstehend ist die Erfindung anhand von in der Zeichnung dargestellten Ausführungsbeispielen im einzelnen erläutert. Es zeigen:
- Fig. 1: eine Vorderansicht einer Schelle mit Elastomereinsatz gemäß dem Stand der Technik;
- Fig. 2: eine gegenüber Fig. 1 in größerem Maßstab gezeichnete, pespektivische Ansicht des Elastomereinsatzes der Schelle von Fig. 1 und
- Fig. 3 bis 5: der Fig. 2 ähnliche perspektivische Ansichten der Elastomereinsätze dreier unterschiedlicher Ausführungsbeispiele der erfindungsgemäßen Schelle.

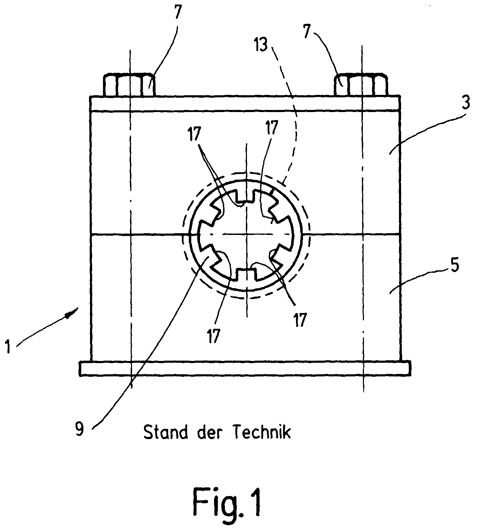

Fig. 1 zeigt eine Blockschelle des Standes der Technik mit einer oberen und einer unteren Klemmbacke 3 bzw. 5, die durch Schrauben 7 aneinander andrückbar sind und zwischen sich eine Aufnahme für einen Einsatz 9 aus einem elastomeren Werkstoff, beispielsweise einem Chloropren-Kautschuk, bilden.

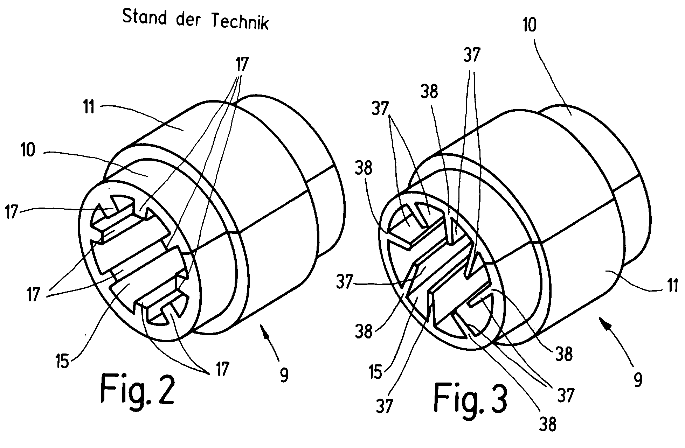

Wie besonders deutlich aus Fig. 2 zu ersehen ist, handelt es sich bei dem Einsatz 9 der bekannten Schelle um eine geschlitzte Hülse 10, deren äußerer Mantel im Zentralbereich einen im Durchmesser erweiterten Abschnitt 11 besitzt, der, wenn die Hülse 10 in ihre Aufnahme zwischen den Klemmbacken 3 und 5 eingesetzt ist, in einer Ringnut 13 aufgenommen ist, die an der Aufnahme in die Klemmbacken 3 und 5 eingearbeitet ist. Der innere Durchgang der Hülse 10 weist von der Innenfläche 15 radial nach innen vorspringende, in Längsrichtung der Hülse 10 verlaufende Rippen 17 auf, die mit ihrer im wesentlichen ebenen Oberseite Anlageflächen für die in der Hülse 10 aufgenommene Leitung (nicht gezeigt) bilden.

Fig. 3 zeigt ein Ausführungsbeispiel des Einsatzes 9 einer erfindungsgemäßen Schelle, wobei sich der Einsatz 9 gegenüber dem Stand der Technik dadurch unterscheidet, daß anstelle von aus der Innenfläche 15 der Hülse 10 vorspringenden Rippen 17 schlanke Lamellen 37 vorgesehen sind, die Anlageflächen für die betreffende Leitung bilden. Wie ersichtlich ist, sind die Lamellen 37 so angeordnet, daß ihre Hauptebenen geneigt zur Radialrichtung der Hülse 10 verlaufen. Aufgrund der schlanken Ausbildung der Lamellen 37, bei denen die Profilbreite wesentlich geringer ist als die Profilhöhe, das Verhältnis zwischen Profilhöhe und Profilbreite also einen Wert von zumindest 2 : 1 oder mehr besitzt, bilden die mit der Innenfläche 15 der Hülse 10 einstückigen Fußteile 38 der Lamellen 37 Biegegelenke in der Art von Filmscharnieren, so daß bei entsprechenden Belastungen ein Nachgeben der Lamellen 37 durch Schwenkbewegungen möglich ist.

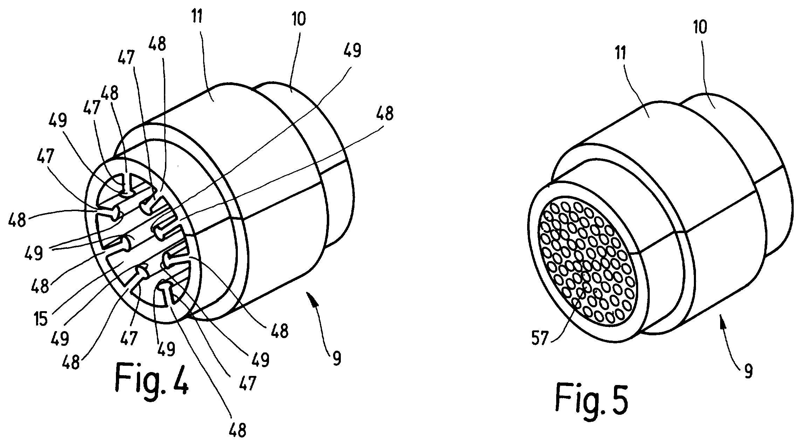

Das in Fig. 4 gezeigte Ausführungsbeispiel des Einsatzes 9 einer erfindungsgemäßen Schelle unterscheidet sich gegenüber dem Ausführungsbeispiel von Fig. 3 dadurch, daß an der Innenfläche 15 der Hülse 10 Lamellen 47 vorgesehen sind, deren Hauptebenen in Radialrichtung verlaufen und die in ihrem kopfseitigen Endbereich gegenüber den Fußteilen 48 nach beiden Seiten hin auskragende Erweiterungen 49 aufweisen. Die Oberseiten der Erweiterungen 49 sind konvex gewölbt, wodurch erreicht wird, daß auch bei gewisser Unrundheit und Fluchtungsfehlern der betreffenden Leitung eine durchgehende Anlagefläche bei einem Nachgeben der Lamellen 47 aufgrund eines am Fußteil 48 erzeugten Momentes zur Verfügung steht.

Fig. 5 zeigt ein weiteres Beispiel des Einsatzes 9 der erfindungsgemäßen Schelle, wobei die Hülse 10 an der Innenfläche vorstehende Noppen 57 aufweist. Diese können in Form kugeliger Vorsprünge in verhältnismäßig dichter gegenseitiger Lagebeziehung ausgebildet sein und bilden einen aus einer Vielzahl von nachgiebigen Anlageflächen gebildeten Sitz für die betreffende, in der Hülse 10 aufgenommene Leitung.

## Patentansprüche

1. Schelle zur Befestigung von Leitungen in Form von Schläuchen, Rohren, Kabeln oder dergleichen, mit einem zwischen Klemmbacken (3, 5) angeordneten, eine betreffende Leitung umgebenden Einsatz (9) in Form einer geschlitzten Hülse (10) aus nachgiebigem Werkstoff, die an ihrer Innenfläche (15) vorspringende Profilkörper aufweist, deren mit der Innenfläche (15) einstückige Fußteile sich in Längsrichtung der Hülse (10) erstrecken und die mit ihrem kopfseitigen Endbereich Anlageflächen für die Leitung bilden, dadurch gekennzeichnet, daß die Profilkörper als leistenartige Lamellen (37; 47) ausgebildet sind, bei denen das Verhältnis zwischen der von Fußteil (38; 48) bis zum kopfseitigen Endbereich gemessenen Profilhöhe und der in Umfangsrichtung an den Fußteilen (38; 48) gemessenen Profilbreite einen Wert von 2 : 1 oder mehr besitzt.

2. Schelle nach Anspruch 1, dadurch gekennzeichnet, daß die kopfseitigen Endbereiche der Lamellen (47) zur Bildung eines näherungsweise T-förmigen Profilquerschnittes eine gegenüber dem Fußteil (48) beidseits auskragende Erweiterung (49) besitzen, deren Oberseite die Anlageflächen für die Leitung bilden.

3. Schelle nach Anspruch 2, dadurch gekennzeichnet, daß die Oberseite der Erweiterungen (49) konvex gewölbt ist.

4. Schelle nach einem der Ansprüche 1 bis 3, dadurch gekennzeichnet, daß die die Profilhöhe definierende Hochachse der Lamellen (37) zur Radialrichtung der Hülse (10) geneigt verläuft.

5. Schelle zur Befestigung von Leitungen in Form von Schläuchen, Rohren oder dergleichen, mit einem zwischen Klemmbacken (3, 5) angeordneten, eine betreffende Leitung umgebenden Einsatz (9) in Form einer geschlitzten Hülse (10) aus nachgiebigem Werkstoff, die an ihrer Innenfläche vorspringende Wandteile aufweist, deren kopfseitiger Endbereich Anlageflächen für die Leitung bilden, dadurch gekennzeichnet, daß die vorspringenden Wandteile durch Noppen (57) der Innenfläche gebildet sind.

6. Schelle nach Anspruch 5, dadurch gekennzeichnet, daß kugelige Noppen (57) in enger gegenseitiger Lagebeziehung vorgesehen sind.

7. Schelle nach einem der Ansprüche 1 bis 6, dadurch gekennzeichnet, daß als Werkstoff der Hülse (10) ein elastomeres Material, vorzugsweise ein Chloropren-Kautschuk, vorgesehen ist.
